# EUROPEAN PATENT SPECIFICATION

(11) **EP 2 492 463 B1**
(45) Date of publication and mention of the grant of the patent: **07.01.2015**
(21) Application number: 09850536.5
(22) Date of filing: 22.10.2009
(51) Int. Cl.: F01N 3/36, F01N 9/00

(54) **EXHAUST PURIFICATION DEVICE OF INTERNAL COMBUSTION ENGINE**
ABGASREINIGER FÜR EINEN VERBRENNUNGSMOTOR
DISPOSITIF D'ÉPURATION D'ÉCHAPPEMENT DE MOTEUR À COMBUSTION INTERNE

(43) Date of publication of application: 29.08.2012
(73) Proprietor: TOYOTA JIDOSHA KABUSHIKI KAISHA, Toyota-shi, Aichi-ken, 471-8571 (JP)
(72) Inventor: TSUJIMOTO, Kenichi, Toyota-shi, Aichi-ken, 471-8571 (JP)
(74) Representative: Kuhnen & Wacker
(86) International application number: PCT/JP2009/005570
(87) International publication number: WO 2011/048637

(56) References cited:
- JP-A- 6 117 240
- JP-A- 2006 112 401
- JP-A- 2008 291 760
- JP-U- H0 643 214
- JP-U- 60 047 816

## Description

### Technical Field

The present invention relates to an exhaust purifying apparatus having a function supplying fuel into an exhaust passage in an internal combustion engine.

### Background Art

A catalyst provided in an exhaust passage in an internal combustion engine has an active temperature range appropriate for purification of hazardous components. When a temperature of the catalyst is out of this active temperature range, the purification capability is remarkably degraded.

In an apparatus disclosed in JP 2001-107721 A, for leading to activation of the catalyst, an addition valve for injecting fuel and ignition means for igniting the injected fuel are provided upstream of the catalyst in the exhaust passage. In a case where the temperature of the catalyst is lower than the active temperature, the fuel supplied from the addition valve is ignited by the ignition means to increase the temperature of the catalyst.

### Summary of Invention

However, in a case where unburned components of fuel, for example, hydrocarbon (HC) and particulate matter (PM), are deposited in a heating portion of the ignition means, the temperature of the ignition means would become excessively high due to combustion of the deposited unburned components, thus raising a possibility that degradation of the ignition means is accelerated.

The present invention has an object of suppressing degradation of ignition means due to combustion of attached foreign objects. This object is solved by the exhaust purifying apparatus for an internal combustion engine according to claim 1.

According to the present invention, an exhaust purifying apparatus for an internal combustion engine comprises:
fuel supplying means for supplying fuel into an exhaust passage in an internal combustion engine;
ignition means for burning the fuel supplied from the fuel supplying means; and
temperature increasing means for igniting the fuel supplied from the fuel supplying means by the ignition means to increase a temperature of an exhaust gas flowing in the exhaust passage.

The exhaust purifying apparatus further comprises:
a controller programmed to control the fuel supplying means, the ignition means and the temperature increasingmeans; wherein the controller is capable of executing a removal operation which, in a case where unburned components of the exhaust gas are deposited on the ignition means, controls the temperature increasing means to burn the deposited unburned components for removal prior to execution of the burning of the fuel by the temperature increasing means without supplying the fuel from the fuel supplying means.

Said controller executes the burning of the fuel under a predetermined condition, which condition is at least one of: that a suppression time has elapsed following the removal by the removal operation, said suppression time being predetermined so that, even if burning of the fuel by the temperature increasing means is executed, the temperature of the ignition means would be lower than an upper limit temperature which would not degrade the ignition means; and
that a temperature of the ignition means is lower than an upper limit temperature, said upper limit temperature being predetermined so that, even if burning of the fuel by the temperature increasing means is executed when the temperature is lower than said upper limit temperature, the temperature of the ignition means would be lower than an upper limit temperature which would not degrade the ignition means.

According to this aspect, the fuel supplying means supplies the fuel into the exhaust passage in the internal combustion engine, and the ignition means burns the fuel supplied from the fuel supplying means. The temperature increasing means increases the temperature of the exhaust gas flowing in the exhaust passage by igniting the fuel supplied from the fuel supplying means by the ignition means. The removal means, in a case where unburned components of the exhaust gas are deposited in the ignition means, burns the deposited unburned components for removal prior to the execution of the temperature increase by the temperature increasing means. The deposited unburned components are removed by the removal means and thereafter, the temperature increase is made by the temperature increasing means. Therefore, an excessive increase of the temperature of the ignition means can be suppressed, thus suppressing degradation of the ignition means.

The apparatus in the present invention may further comprise:
means for obtaining a temperature of the exhaust passage, wherein the temperature increasing means may shorten the execution time of the burning of fuel as the temperature of the exhaust passage is higher. Since the ignition means is arranged in the exhaust passage, as the temperature of the exhaust passage is higher, the more quickly the temperature of the ignition means increases. Therefore, according to this aspect, an excessive temperature increase can be suppressed to suitably suppress the degradation of the ignition means.

The apparatus in the present invention may further comprise:
means for obtaining a fuel supply quantity from the fuel supplying means, wherein
the temperature increasing means may shorten the execution time of the burning of fuel as the fuel supply quantity is larger.

According to this aspect, an excessive temperature increase can be suppressed to suitably suppress the degradation of the ignition means.

### Brief Description of Drawings

[Fig. 1] Fig. 1 is a concept diagram of an embodiment according to the present invention;
[Fig. 2] Fig. 2 is a graph showing a setting example of a fuel supply time map;
[Fig. 3] Fig. 3 is a flow chart showing a catalyst heating process; and
[Fig. 4] Fig. 4 is a graph showing a temperature change in an exhaust passage in the embodiment.

### Description of Embodiments

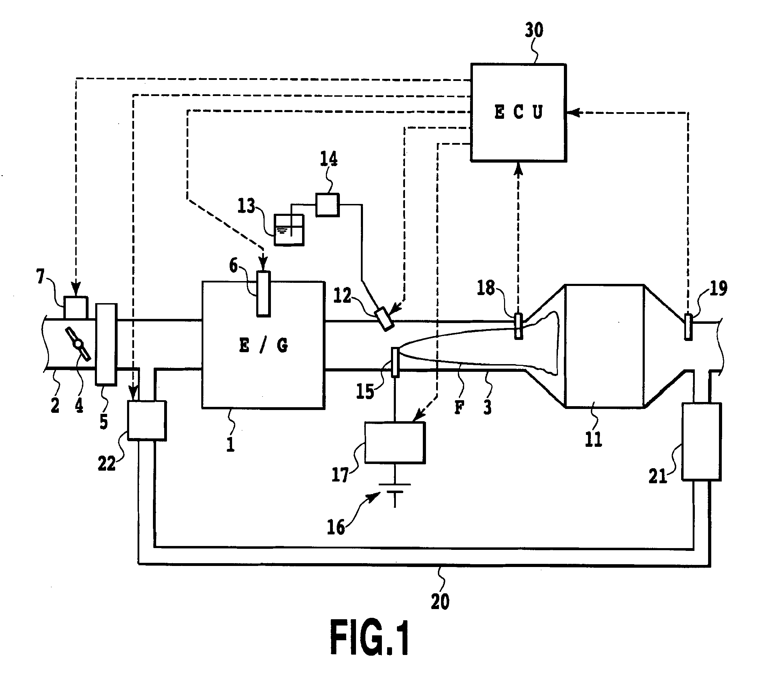

An embodiment in the present invention will be explained below. In Fig. 1, an exhaust purifying apparatus for an internal combustion engine has an engine 1, an intake pipe 2 and an exhaust pipe 3. The engine 1 is a diesel internal combustion engine, but may be of the other type of internal combustion engine.

A throttle valve 4 and a surge tank 5 are arranged in the intake pipe 2. The throttle valve 4 is driven by a throttle actuator 7. An injector 6 for driving is provided and is directed toward a combustion chamber in the engine 1.

The exhaust pipe 3 is connected to the engine 1 at the upstream side as the left side in Fig. 1 and is connected to a muffler (not shown) at the downstream side as the right side in the figure. A catalyst 11 is provided in the exhaust pipe 3. The catalyst 11 is composed of, for example, an oxidation catalyst, a three-way catalyst or a NOx catalyst and the base material is made of cordierite or metal.

An injector 12 for catalyst heating is installed in the exhaust pipe 3 upstream of the catalyst 11 for an injection opening thereof to be exposed to an inside of the exhaust pipe 3. Fuel in a fuel tank 13 is supplied via a pump 14 to the injector 12. It should be noted that, for accelerating the combustion, a pipe line, a control valve and a compressor for supplying air for combustion into the exhaust pipe 3 from an outside may be provided.

A glow plug 15 is provided in the exhaust pipe 3 downstream of the injector 12. The glow plug 15 is installed in a position where fuel added from the injector 12 makes contact with the glow plug 15. The glow plug 15 has a tip end projecting into the exhaust passage. A direct-current power source 16 and a voltage boosting circuit 17 for supplying power to the glow plug 15 are connected to the glow plug 15. A ceramic heater may be used as the ignition means or the heating apparatus instead of the glow plug.

An exhaust temperature sensor 18 is installed in the exhaust pipe 3 upstream of the catalyst 11. The exhaust temperature sensor 18 has a thermistor of which a resistance value changes depending on a temperature. A change of the exhaust temperature can be detected by a change in the resistance value of the thermistor.

An air-fuel ratio sensor 19 is provided in the exhaust pipe 3 downstream of the catalyst 11. The air-fuel ratio sensor 19 has a sheet-shaped solid electrolyte element made of an oxygen ion conductive material (for example, zirconia) and a pair of electrodes sandwiching the solid electrolyte element and generates output in proportion to an oxygen density in the exhaust gas. The air-fuel ratio sensor 19 is of a so-called laminate type in which the solid electrolyte is directly heated by a heater incorporated therein, but may be of a cup type in which the solid electrolyte is indirectly heated through an atmospheric layer.

The exhaust pipe 3 downstream of the catalyst 11 is connected to the intake pipe 2 downstream of the surge tank 5 to form an EGR (exhaust gas recirculation) passage 20. An intercooler 21 for cooling an exhaust gas and an EGR control valve 22 for controlling a flow amount of the exhaust gas are arranged in the EGR passage 20.

An operation of each of the throttle actuator 7, the pump 14, the glow plug 15, the voltage boosting circuit 17 and the EGR control valve 22 is controlled by an ECU (electronic control unit) 30.

The ECU 30 is a well-known one-chip microprocessor and is equipped with a CPU, a ROM, a RAM, an involatile memory apparatus, an input/output interface, an A/D converter and a D/A converter. Various types of sensors are electrically connected to the input/output interface in the ECU 30 for detecting a state of a vehicle including an engine operating state and an engine operating input state, and signals of the sensors are inputted thereto. Examples of such various types of sensors include the exhaust temperature sensor 18 and the air-fuel ratio sensor 19 described above, further an air flow meter, a throttle opening sensor, a crank angle sensor, and an accelerator pedal sensor.

The injectors 6 and 12, the throttle actuator 7, the pump 14, the boosting circuit 17 and the EGR control valve 22 are electrically connected to the output interface of the ECU 30, which outputs control signals. The ECU 30 calculates a fuel supply indication quantity based upon parameters showing a state of a vehicle including the air flow meter, the throttle opening sensor, the crank angle sensor, and the accelerator pedal sensor, particularly an operating state of the engine, and outputs a control signal for opening the injectors 6 and 12 by a time corresponding to the indication quantity. Fuel of a quantity corresponding to the fuel supply indication quantity is supplied from the injectors 6 and 12 in response to the control signal.

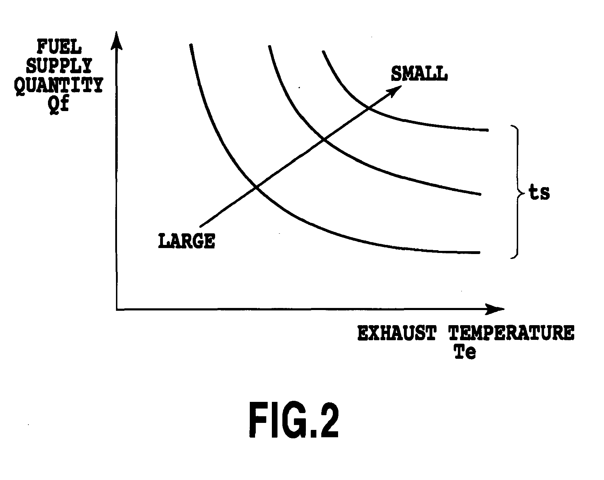

Various kinds of programs, reference values and initial values are stored in the ROM of the ECU 30. The reference values and the initial values include a suppression time tc and an upper limit temperature Ta used in the process to be described later. A fuel supply time map produced in advance (refer to Fig. 2) is stored in the ROM of the ECU 30. An exhaust temperature Te, a fuel supply quantity Qf, and a fuel supply time ts are associated with each other, which are stored in the fuel supply time map.

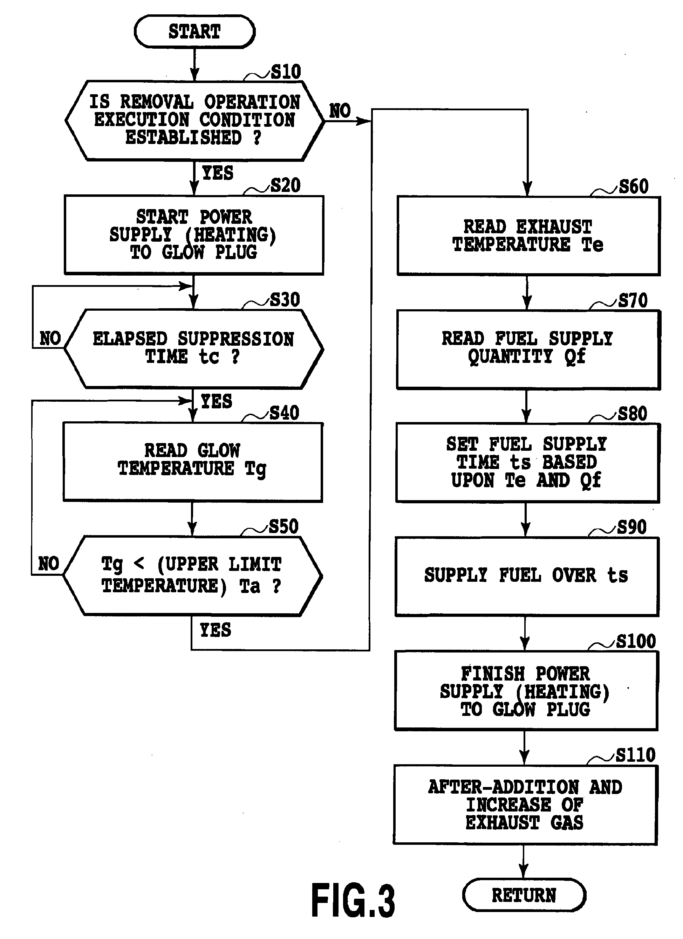

The ECU 30 executes the following catalyst heating process immediately after a starting-up state of an engine from a cold stop state thereof. In Fig. 3, the ECU 30 first determines whether or not a predetermined removal operation execution condition is established (S10). The removal operation execution condition can be defined as the event that a predetermined time, for which HC or PM is possibly deposited to some extent, elapses (or a vehicle travels by a predetermined travel distance) from a point where the glow plug 15 is finally power-supplied and heated. Alternatively, the removal operation may be performed in an arbitrary timing when the fuel addition is not made from the injector 12. In a case where the execution condition is not established, step S20 to step S50 are skipped.

When the removal operation execution condition is established, the ECU 30 starts power-supply (that is, heating) to the glow plug 15 (S20). This power-supply continues to be performed over a predetermined suppression time tc (S30), and fuel is not supplied from the injector 12 during that period. As a result of this, the heat of the glow plug 15 causes unburned components of HC, PM or the like deposited in the heating portion to burn for removal. The suppression time tc is set to a time large enough for the unburned components deposited in the heating portion of the glow plug 15 to burn and removed. The heating by the glow plug 15 continues to be performed during the period of the suppression time tc, but after the deposited unburned components are burned, since the glow plug 15 is cooled by the exhaust flow, a temperature of the glow plug 15 is lowered.

A value of the suppression time tc may be a fixed value or may be set dynamically. In a case where the suppression time tc is set dynamically, the value may be set based upon a parameter relating to an amount of the deposited unburned components (for example, a cumulative travel time, a cumulative travel distance or a cumulative fuel addition quantity after the previous removal process) and/or a parameter relating to a combustion velocity of the deposited unburned components (for example, an engine water temperature or exhaust temperature).

When the suppression time tc elapses, the ECU 30 calculates a glow temperature Tg as a temperature of the heating portion in the glow plug 15, which is read in the RAM (S40). The glow temperature Tg can be calculated by referring to a table based on load current values, based upon temperature resistance characteristics of the glow plug 15, for example. The ECU 30 determines whether or not the glow temperature Tg is lower than a predetermined upper limit temperature Ta (S50), and repeats this determination operation until it becomes lower than the upper limit temperature Ta. This upper limit temperature Ta is in advance set to a value higher than a temperature of the heating portion in a case where foreign objects of unburned components and the like do not exist, and lower than a temperature of the heating portion in a case where the foreign object burns. Therefore, when the determination result at step S50 is positive, it is considered that the combustion of the foreign object at the heating portion in the glow plug 15 is completed or the foreign object is not deposited as much as enabling the combustion and the combustion has not occurred. The upper limit value Ta may be a fixed value or may be dynamically set based upon a state of a vehicle (for example, an engine water temperature).

When the determination result at step S50 is positive, the ECU 30 reads in a value of an exhaust temperature Te detected by the exhaust temperature sensor 18 (S60), and a value of a fuel supply quantity Qf variably set, for example, based upon an output value of the exhaust temperature sensor 18 (S70) respectively. By a separate process, the fuel supply quantity Qf is set to a quantity matching up to increasing the exhaust temperature until a target value, and fuel of the set fuel supply quantity Qf is added at a time, or added by the number of variable times corresponding to the fuel supply quantity Qf in which an addition of a predetermined quantity is set. Following step S70, the ECU 30 refers to the fuel supply time map based upon the values of the read exhaust temperature Te and fuel supply quantity Qf, to calculate and set the fuel supply time ts (S80). As shown in Fig. 2, the fuel supply time ts is set to be the shorter as the exhaust temperature Te is higher or as the fuel supply quantity is larger. The ECU 30 controls the injector 12 to supply fuel to the exhaust passage for the fuel supply time ts. The supply of the fuel may be made successively or intermittently. The fuel supplied is ignited by the heat of the glow plug 15, and a temperature of the catalyst 11 is increased by flames Fgenerated by this combustion. As the fuel supply time ts elapses, the ECU 30 terminates the heating by the glow plug 15 (S100).

Immediately after completion of the heating, or after an elapse of the predetermined suppression time, a fuel injection (after-addition) not accompanied by the heating by the glow plug 15, and an increase in an exhaust flow amount due to an increase in an opening degree of each of the EGR control valve 22 and the throttle valve 4, are respectively performed for a predetermined time (S110), and as these events are completed, the process returns. A tip end of the injector 12 and the glow plug 15 are cooled by the after-addition and the increase of the exhaust flow amount, thus lowering the ignitability and suppressing damages or melting damages of the exhaust pipe or the exhaust components by the flame F.

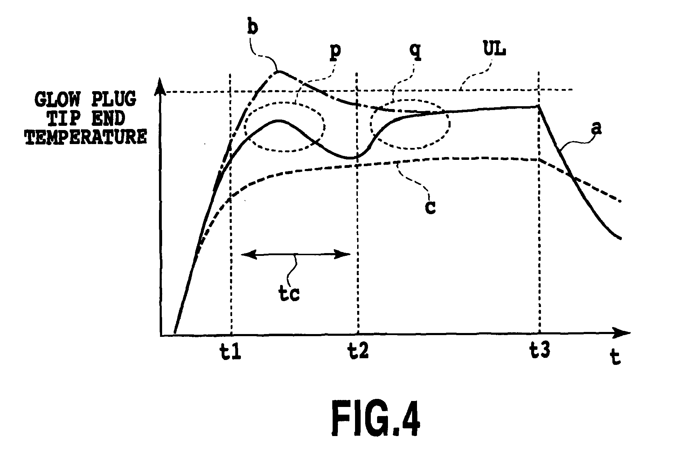

As a result of the above processes, according to the present embodiment, only the heating by the glow plug 15 is performed without performing the fuel supply from the injector 12 for the suppression time tc from the start of the heating, prior to the execution of the temperature increasing operations by both of the fuel supply (S90) and the heating. In consequence, the fuel supply is not performed within the suppression time tc, and the deposited unburned components only are burned. Therefore, a tip end temperature of the glow plug 15 shown in a solid line a of Fig. 4 is, as shown in an ellipse p in the figure, lower than an upper limit temperature UL under which the glow plug 15 is not degraded. On the other hand, in a case where the temperature increasing operations by both of the fuel supply (S90) and the heating are performed after an elapse of the suppression time tc, the unburned component is already removed. Therefore, only combustion of the fuel supplied from the injector 12 is performed, and, as shown in an ellipse q in the figure, the temperature of the glow plug 15 does not become excessively high. In this manner, in the present embodiment, an excessive increase in temperature of the glow plug 15 is suppressed, and thus, degradation of the glow plug 15 can be suppressed. If the suppression time tc is not provided, the tip end temperature of the glow plug 15 would, as shown in a chain line b, exceed the upper limit temperature UL, since the deposited unburned component and the supplied fuel both are burned for an initial period of the heating. It should be noted that a dotted line c in Fig. 4 shows a tip end temperature of the glow plug 15 in a case of no deposit of the unburned component and no supply of the fuel.

In addition, in the present embodiment, the temperature increase by the fuel supply and the heating is started after start of the heating for removal of the deposited unburned component, and also after an elapse of the predetermined suppression time tc. As a result of this, the temperature of the glow plug 15 is lowered due to the elapse of the suppression time tc, and therefore the degradation of the heating apparatus can be suitably suppressed with a simple construction.

In addition, the present embodiment further comprises means for obtaining a temperature of the glow plug 15, wherein the ECU 30 executes the temperature increase by the fuel supply and the heating in a case where the temperature of the glow plug 15 is lower than a predetermined upper limit temperature. Therefore, it is guaranteed that the temperature of the glow plug 15 is low at the temperature increasing, thereby making it possible to suitably suppress degradation of the glow plug 15. It should be noted that the condition for lifting the suppression of the fuel supply may be one of two conditions that the suppression time tc elapses (S30) and that the glow temperature Tg is lower than the upper limit temperature Ta (S50).

In addition, the present embodiment further comprises the exhaust temperature sensor 18 for obtaining a temperature of the exhaust passage, wherein the fuel supply time ts, as the execution time of the temperature increase, is set to be the shorter as the exhaust temperature Te is higher, and is set to be the shorter as the fuel supply quantity Qf is larger. Therefore, by suppressing the excessive temperature increase, the degradation of the glow plug 15 can be suitably suppressed.

In addition, in the present embodiment, immediately after completion of the heating, or after an elapse of the predetermined suppression time, the fuel injection (after-addition) not accompanied by the heating by the glow plug 15, and the increase of the exhaust flow amount due to the increase of the opening degree of each of the EGR control valve 22 and the throttle valve 4, are performed (S110). Therefore, the tip end of the injector 12 and the glow plug 15 can be quickly cooled (after t3 in Fig. 4). In regard to the after-addition and the increase of the exhaust flow amount, only one of them may be performed. The increase of the exhaust flow amount may start immediately before the power supply to the glow plug 15 (S20), and in this case, the combustion is made to be performed downstream of the tip end of the glow plug 15, thus suppressing an temperature increase of the tip end.

The present invention has been specially explained to some extent, but it should be understood that various modifications and changes can be made without departing from the scope of the claimed inventions. In the above embodiment, the ECU 30 does not perform the supply of the fuel from the injector 12 over the predetermined suppression time tc including the start time of the heating operation of the glow plug 15 (S30). However, instead of this construction, supply of the fuel in a quantity smaller than the fuel supply performed at step S90 (for example, by an intermittent injection) may be performed for the suppression time tc. In the above embodiment, the fuel supply time ts is set as a function of the exhaust temperature Te and the fuel supply quantity Qf, but may be set as a function of only one of them.

### Reference Signs List

- 3: EXHAUST PIPE
- 11: CATALYST
- 6, 12: INJECTOR
- 14: PUMP
- 15: GLOW PLUG
- 18: EXHAUST TEMPERATURE SENSOR
- 22: EGR VALVE
- 30: ECU

## Claims

1. An exhaust purifying apparatus for an internal combustion engine comprising:
fuel supplying means (12) for supplying fuel into an exhaust passage in an internal combustion engine;
ignition means (15) for burning the fuel supplied from the fuel supplying means (12);
temperature increasing means (16, 17) for igniting the fuel supplied from the fuel supplying means (12) by the ignition means (15) to increase a temperature of an exhaust gas flowing in the exhaust passage,
**characterized in that** the exhaust purifying apparatus further comprises:
a controller (30) programmed to control the fuel supplying means (12), the ignition means (15) and the temperature increasing means (16, 17); wherein:
the controller (30) is capable of executing a removal operation which, in a case where unburned components of the exhaust gas are deposited on the ignition means (15), controls the temperature increasing means (16, 17) to burn the deposited unburned components for removal prior to execution of the burning of the fuel by the temperature increasing means (16, 17) without supplying the fuel from the fuel supplying means (12), and wherein:
said controller (30) executes the burning of the fuel under a predetermined condition, which condition is at least one of:
that a suppression time (tc) has elapsed following the removal by the removal operation, said suppression time (tc) being predetermined so that, even if burning of the fuel by the temperature increasing means (16, 17) is executed, the temperature of the ignition means (15) would be lower than an upper limit temperature (UL) which would not degrade the ignition means (15); and
that a temperature (tg) of the ignition means (15) is lower than an upper limit temperature (Ta), said upper limit temperature (Ta) being predetermined so that, even if burning of the fuel by the temperature increasing means (16, 17) is executed when the temperature (tg) is lower than said upper limit temperature (Ta), the temperature of the ignition means (15) would be lower than an upper limit temperature (UL) which would not degrade the ignition means (15).

2. An exhaust purifying apparatus for an internal combustion engine according to claim 1, further comprising:
means for obtaining a temperature of the exhaust passage, wherein
the temperature increasing means (16, 17) shortens the execution time of the burning of the fuel as the temperature of the exhaust passage is higher.

3. An exhaust purifying apparatus for an internal combustion engine according to claim 1, further comprising:
means for obtaining a fuel supply quantity from the fuel supplying means, wherein
the temperature increasing means (16, 17) shortens the execution time of the burning of the fuel as the fuel supply quantity is larger.

## Patentansprüche

1. Abgasreinigungsvorrichtung für eine Brennkraftmaschine, aufweisend:
eine Kraftstoffzuführeinrichtung (12) zum Zuführen von Kraftstoff in eine Abgasleitung in einer Brennkraftmaschine;
eine Zündeinrichtung (15) zum Verbrennen des von der Kraftstoffzuführeinrichtung (12) zugeführten Kraftstoffs;
eine Temperaturerhöhungseinrichtung (16, 17) zum Zünden des von der Kraftstoffzuführeinrichtung (12) zugeführten Kraftstoffs durch die Zündeinrichtung (15), so dass eine Temperatur eines in der Abgasleitung strömenden Abgases erhöht wird,
**dadurch gekennzeichnet, dass** die Abgasreinigungsvorrichtung ferner aufweist:
einen Controller (30), der so programmiert ist, dass er die Kraftstoffzuführeinrichtung (12), die Zündeinrichtung (15) und die Temperaturerhöhungseinrichtung (16, 17) steuern kann; wobei:
der Controller (30) in der Lage ist, einen Beseitigungsbetrieb auszuführen, der, in einem Fall, wo die unverbrannten Komponenten des Abgases auf der Zündeinrichtung (15) abgeschieden sind, die Temperaturerhöhungseinrichtung (16, 17) so steuert, dass sie die abgeschiedenen unverbrannten Komponenten zur Beseitigung vor einer Ausführung der Verbrennung des Kraftstoffs durch die Temperaturerhöhungseinrichtung (16, 17) ohne Zuführen des Kraftstoffs von der Kraftstoffzuführeinrichtung (12) verbrennt, und wobei:
der Controller (30) die Verbrennung des Kraftstoffs unter einer vorbestimmten Bedingung ausführt, wobei die Bedingung zumindest eine davon ist:
dass eine Unterdrückungszeit (tc) im Anschluss an die Beseitigung durch den Beseitigungsbetrieb verstrichen ist, wobei die Unterdrückungszeit (tc) vorbestimmt ist, so dass, selbst wenn die Verbrennung des Kraftstoffs durch die Temperaturerhöhungseinrichtung (16, 17) ausgeführt wird, die Temperatur der Zündeinrichtung (15) niedriger wäre als eine Temperaturobergrenze (UL), bei der die Zündeinrichtung (15) sich nicht verschlechtern würde; und/oder
dass eine Temperatur (tg) der Zündeinrichtung (15) niedriger ist als eine Temperaturobergrenze (Ta), wobei die Temperaturobergrenze (Ta) vorbestimmt ist, so dass, selbst wenn die Verbrennung des Kraftstoffs durch die Temperaturerhöhungseinrichtung (16, 17) ausgeführt wird, wenn die Temperatur (tg) niedriger als die Temperaturobergrenze (Ta) ist, die Temperatur der Zündeinrichtung (15) niedriger wäre als eine Temperaturobergrenze (UL), bei der die Zündeinrichtung (15) sich nicht verschlechtern würde.

2. Abgasreinigungsvorrichtung für eine Brennkraftmaschine nach Anspruch 1, ferner aufweisend:
eine Einrichtung zum Erhalten einer Temperatur der Abgasleitung, wobei
die Temperaturerhöhungseinrichtung (16, 17) die Ausführungszeit der Verbrennung des Kraftstoffs verkürzt, wenn die Temperatur der Abgasleitung höher ist.

3. Abgasreinigungsvorrichtung für eine Brennkraftmaschine nach Anspruch 1, ferner aufweisend:
eine Einrichtung zum Erhalten einer Kraftstoffzuführmenge von der Kraftstoffzuführeinrichtung, wobei
die Temperaturerhöhungseinrichtung (16, 17) die Ausführungszeit der Verbrennung des Kraftstoffs verkürzt, wenn die Kraftstoffzuführmenge größer ist.

## Revendications

1. Appareil d'épuration d'échappement pour un moteur à combustion interne comprenant :
des moyens d'alimentation en carburant (12) pour fournir du carburant à une conduite d'échappement d'un moteur à combustion interne ;
des moyens d'allumage (15) pour brûler le carburant fourni par les moyens d'alimentation en carburant (12) ;
des moyens d'augmentation de température (16, 17) pour enflammer le carburant fourni par les moyens d'alimentation en carburant (12) grâce aux moyens d'allumage (15) afin d'augmenter une température d'un gaz d'échappement circulant dans la conduite d'échappement,
**caractérisé en ce que** l'appareil d'épuration d'échappement comprend en outre :
un dispositif de commande (30) programmé pour commander les moyens d'alimentation en carburant (12), les moyens d'allumage (15) et les moyens d'augmentation de température (16, 17) ; dans lequel
le dispositif de commande (30) est apte à exécuter une opération d'élimination, qui, dans un cas où les éléments non brûlés du gaz d'échappement sont déposés sur les moyens d'allumage (15), commande aux moyens d'augmentation de température (16, 17) de brûler les éléments non brûlés déposés pour les éliminer avant l'exécution de la combustion du carburant par les moyens d'augmentation de température (16, 17) sans fournir le carburant provenant des moyens d'alimentation en carburant (12), et dans lequel :
ledit dispositif de commande (30) exécute la combustion du carburant dans une condition prédéterminée, laquelle est au moins l'une des conditions suivantes :
qu'un temps de suppression (tc) se soit écoulé suite à l'élimination par l'opération d'élimination, ledit temps de suppression (tc) étant prédéterminé de telle sorte que, même si la combustion du carburant par les moyens d'augmentation de température (16, 17) était exécutée, la température des moyens d'allumage (15) serait inférieure à une température limite supérieure (UL) qui ne détériorerait pas les moyens d'allumage (15) ; et
qu'une température (tg) des moyens d'allumage (15) soit inférieure à une température de limite supérieure (Ta), ladite température de limite supérieure (Ta) étant prédéterminée de telle sorte que, même si la combustion du carburant par les moyens d'augmentation de température (16, 17) était exécutée lorsque la température (tg) est inférieure à ladite température limite supérieure (Ta), la température des moyens d'allumage (15) serait inférieure à une température de limite supérieure (UL) qui ne détériorerait pas les moyens d'allumage (15).

2. Appareil d'épuration d'échappement pour un moteur à combustion interne selon la revendication 1, comprenant en outre :
des moyens pour obtenir une température de la conduite d'échappement, dans lequel
les moyens d'augmentation de température (16, 17) raccourcissent le temps d'exécution de la combustion du carburant puisque la température de la conduite d'échappement est supérieure.

3. Appareil d'épuration d'échappement pour un moteur à combustion interne selon la revendication 1, comprenant en outre :
des moyens pour obtenir une quantité d'alimentation en carburant des moyens d'alimentation en carburant, dans lequel
les moyens d'augmentation de température (16, 17) raccourcissent le temps d'exécution de la combustion du carburant puisque la quantité d'alimentation en carburant est plus importante.
